# EUROPEAN PATENT APPLICATION

(11) **EP 4 235 401 A1**
(43) Date of publication of application: **30.08.2023**
(21) Application number: 23158342.8
(22) Date of filing: 23.02.2023
(51) Int. Cl.: G06F 7/74

(54) **FIND FIRST FUNCTION**

(30) Priority: 28.02.2022 GB 202202733
(71) Applicant: Imagination Technologies Limited, Kings Langley Hertfordshire WD4 8LZ (GB)
(72) Inventor: BOND, Jeffery, Hertfordshire WD4 8LZ (GB)
(74) Representative: Elkington and Fife LLP

(57) **Abstract**

A method for finding the first one bit in a vector is disclosed. The bits of the vector are grouped into pairs of adjacent bits. Within each pair of two the presence or absence of a one bit is identified and the position determined. There may be multiple levels so a second level groups has inputs based on the determinations from the two pairs. Based on the inputs the presence of absence of a one bit is determined and, if present, the position within the respective bits of the vector. This can be repeated over multiple levels.

## Description

### BACKGROUND

Find first function is a common function in which the first 1 bit in a vector is found. This can be starting from the least significant bit, working towards the more significant bits. Alternatively, an arbitrary starting point can be used and the first 1 bit in a vector (moving towards more significant bits) found. If an arbitrary starting point is used and no 1 bit is found in the more significant bits the function can be set up to wrap to the least significant bit and continue searching from the least significant bit.

Find first functions are commonly used in sequencing of transactions. For example, it is commonly used to find the oldest instruction that is ready for processing in a queue. Find first functions are also used in caches and circular buffers to find the oldest data or in look up tables.

There are currently different solutions for finding the first 1 bit. However, they involve iterating over the whole string of bits and, for a large vector, iterating over the whole vector can be very time consuming.

It is therefore desirable to find a faster way of searching for the first one bit in a vector.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A method for finding the first one bit in a vector is disclosed. The bits of the vector are grouped into pairs of adjacent bits. Within each pair of two the presence or absence of a one bit is identified and the position determined. There may be multiple levels so a second level groups has inputs based on the determinations from the two pairs. Based on the inputs the presence of absence of a one bit is determined and, if present, the position within the respective bits of the vector. This can be repeated over multiple levels.

According to one aspect, there is provided a machine-implemented method of processing a vector, the method comprising: receiving the vector, grouping the bits of the vector into mutually exclusive pairs of two adjacent bits, identifying, in each pair of two, the presence or absence of a one bit and outputting a first level indicator output indicating whether a one bit is present in the respective bits of the vector and a first level position output indicating the position of the first one bit in the respective bits of the vector, grouping the first level indicator output and the first level position outputs into mutually exclusive groups of two adjacent first level indicator outputs and first level position outputs, and determining, based on a group of two adjacent first level indicator outputs, the presence of absence of a one bit in the respective bits of the vector and outputting a second level indicator output indicating whether a one bit is present in the respective bits of the vector and, based on a group of two adjacent first level position outputs, the position of the first one bit in the respective bits of the vector and outputting a second level position output indicating the position of the first one bit in the respective bits of the vector.

Due to the tree structure the time taken to search the vector does not scale linearly with the length of the vector but rather scales as the number of levels of the tree structure increases.

The method may further comprise: grouping the second level indicator output and the second level position outputs into mutually exclusive groups of two adjacent second level indicator outputs and second level position outputs, and determining, based on a group of two adjacent second level indicator outputs, the presence or absence of a one bit in the respective bits of the vector and outputting a third level indicator output indicating whether a one bit is present in the respective bits of the vector and, based on a group of two adjacent second level position outputs, the position of the first one bit in the respective bits of the vector and outputting a third level position output indicating the position of the first one bit in the respective bits of the vector.

Grouping an (n-1)th level indicator output and a (n-1)th level position output and determining the presence or absence of a one bit in the respective bits of the vector to output an n level indicator output and a n level position output may be repeated until a grouping and determining step is determining the presence or absence of a one bit, and the position of the first one bit in the whole vector.

In some examples the position of the first one bit is searched starting from the least significant bit in each group or pair. In other examples the position of the first one bit is searched starting from the most significant bit in each group or pair.

The most significant bit in the second level position output may be based on the first one bit in the first level indicator outputs in the group of two adjacent first level indicator outputs, a zero most significant bit indicating a first one bit in a first group of two and a one most significant bit indicating a first one bit in a second group of two. The least significant bits in the second level position output may be the position input from the group of two on which the most significant bit is based.

In some examples a position output is only valid if the corresponding indicator output indicates that a zero is present in the respective bits of the vector.

In some examples a starting position other than the least or most significant bit may be used. The method may further comprise receiving an index position indicating the starting search position, switching each pair of two and each group of two into one of three states on the basis of the relative location of the index position and the position of the bits in the vector, the three states comprising on, off and indexed, wherein the outputting an indicator output based on each pair of two and each group of two comprises, if the pair or group of two is in an off state outputting an indicator output indicating that no one bit is present, and if the pair or group of two is in an on state outputting an indicator output based on the presence or absence of a one bit, and if the pair or group of two is in an indexed state outputting an indicator output based on the presence or absence of a one bit only for positions to be searched.

Each pair of two and each group of two at a lower bit position than the index position is switched into an off state, each pair of two and each group of two at a higher bit position than the index position is switched into an on state, and each pair of two and each group of two including the index position is switched into an indexed state.

The method may search for the first one bit from a starting position, moving towards more significant bits. In some examples, a second function of finding the first one bit may be carried out without a starting position i.e. searching from the least significant bit. This may be achieved by performing two search functions: one with a starting, or index, position and the second without an index position i.e. starting from the least significant bit. If a one bit is identified from the processing using an index position, the position of the first one bit from the processing using an index is output as a result and if a one bit is not identified from the processing using an index position the position of the first one bit from the processing with no index is output as a result.

The method has been described in conjunction with finding the first one bit. However, it can equally be used to find the first zero bit. An alternative way of achieving this is to switch the one bits and zero bits and search for the zero bits as described above.

The present invention has been described in conjunction with pairs, or groups of two. However, the vector could instead be grouped into groups of a different number: for example, three, four or five. Binary notation could still be used or alternatively base x notation could be used for groupings of size x.

Also provided is a data processing system configured to perform a method as summarised above. The data processing system may be embodied in hardware on an integrated circuit.

Also provided is a method of manufacturing, using an integrated circuit manufacturing system, a data processing system as summarised above.

Also provided is a method of manufacturing, using an integrated circuit manufacturing system, a data processing system as summarised above, the method comprising: processing, using a layout processing system, a computer readable description of the data processing system so as to generate a circuit layout description of an integrated circuit embodying the data processing system; and manufacturing, using an integrated circuit generation system, the data processing system according to the circuit layout description.

Also provided is computer readable code configured to cause a method as summarised above to be performed when the code is run. Also provided is a computer readable storage medium (optionally non-transitory) having encoded thereon the computer readable code.

Further provided is an integrated circuit definition dataset that, when processed in an integrated circuit manufacturing system, configures the integrated circuit manufacturing system to manufacture a data processing system as summarised above.

Also provided is a computer readable storage medium having stored thereon a computer readable description of a data processing system as summarised above that, when processed in an integrated circuit manufacturing system, causes the integrated circuit manufacturing system to manufacture an integrated circuit embodying the data processing system.

Also provided is a computer readable storage medium having stored thereon a computer readable description of a data processing system as summarised above which, when processed in an integrated circuit manufacturing system, causes the integrated circuit manufacturing system to: process, using a layout processing system, the computer readable description of the data processing system so as to generate a circuit layout description of an integrated circuit embodying the data processing system; and manufacture, using an integrated circuit generation system, the data processing system according to the circuit layout description.

Also provided is an integrated circuit manufacturing system configured to manufacture a data processing system as summarised above.

Further provided is an integrated circuit manufacturing system comprising: computer readable storage medium having stored thereon a computer readable description of a data processing system as summarised above; layout processing system configured to process the computer readable description so as to generate a circuit layout description of an integrated circuit embodying the data processing system; and an integrated circuit generation system configured to manufacture the data processing system according to the circuit layout description. The layout processing system may be configured to determine positional information for logical components of a circuit derived from the integrated circuit description so as to generate a circuit layout description of an integrated circuit embodying the data processing system.

The above features may be combined as appropriate, as would be apparent to a skilled person, and may be combined with any of the aspects of the examples described herein.

### BRIEF DESCRIPTION OF THE DRAWINGS

Examples will now be described in detail with reference to the accompanying drawings in which:
Figure 1 depicts a leaf node;
Figure 2 depicts a three level system;
Figure 3 depicts a branch;
Figure 4a depicts the three level system of figure 2 processing a vector;
Figure 4b depicts the three level system of figure 2 processing another vector;
Figure 5 depicts a three level system searching from a starting position;
Figure 6a depicts a three level system searching from a starting position with a wrap function;
Figure 7 shows a computer system in which a graphics processing system is implemented; and
Figure 8 shows an integrated circuit manufacturing system for generating an integrated circuit embodying a graphics processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

Faced with a desire to find the first one bit in a lengthy vector current methods involve iterating over the whole vector. In a lengthy vector this can take a long time. It is therefore desirable to provide a faster method of finding the first one bit digit in a vector.

The present approach groups bits of a vector into mutually exclusive pairs. The pairs are generally paired from the least significant bit first. Each pair is then examined by a leaf node.

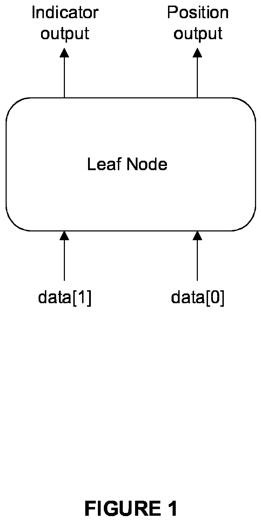

Figure 1 depicts a leaf node according to this approach for finding the first one bit in a two bit vector. The two bits, data[0] and data[1] are input and there are two outputs, each of a single bit (or digit): an indicator output and a position output. The leaf node identifies whether or not a one bit is present in the two bits input. If a one bit is present it outputs a first output as an indicator output and if a one bit is not present it outputs a second output as an indicator output. For example, if a one bit is found among the two bits a one might be output as a first indicator output. If no one bit is found among the two bits a zero might be output as a first indicator output.

The second output from the leaf node is a position output. This is only valid if the indicator output indicates that a one bit is present. If valid, the position output indicates the position of the first one bit, starting from the least significant bit. So, searching for the first one bit starting from the least significant bit generates the following outputs:

| Input | Indicator Output | Position Output |
|---|---|---|
| 00 | 0 | 0 |
| 01 | 1 | 0 |
| 10 | 1 | 1 |
| 11 | 1 | 0 |

So, a leaf node can be summarised as:
- "Indicator output" indicates if a one bit was found based on the two input bits, in this example data [0] or data [1]
- "Position output" indicates the position of the first one bit and is only valid if "indicator output" = 1. It can be NOT data[0] (as this will give the correct position output whenever the position output is valid)

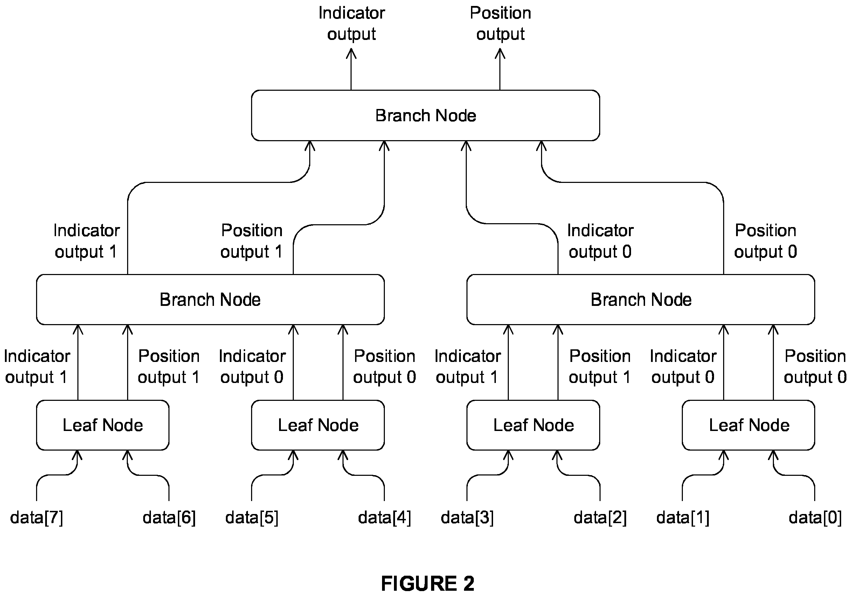

In this example a leaf node only searches two digits. In order to search vectors with more than two digits multiple leaf nodes are required. The outputs from each leaf node are then grouped into mutually exclusive groups of two and each mutually exclusive group of two is examined by a branch node. Figure 2 depicts an arrangement for searching for the first one bit in an eight digit vector. As can be seen, there are three levels: a first level comprising leaf nodes; a second level comprising branch nodes and a third level comprising another branch node. The outputs from one level are the inputs into the next level. So, a first level output forms an input to a second level node.

The leaf nodes operate as described above in conjunction with figure 1.

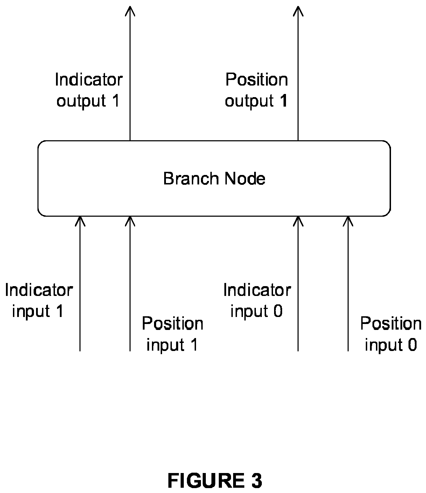

A branch node is depicted in figure 3. In figure 3, which shows a single branch node in isolation, the signals depicted at the bottom of the figure are the inputs to the respective node, and are labelled as such, whilst the signals depicted above the node are the outputs from the node (and, again, are labelled as such). However, in figures that contain multiple levels of branch nodes, an output signal from a node in one (lower) level can be an input to a node at the next (higher) level and, for simplicity, those signals are simply labelled as outputs from the lower level node.

A branch node identifies if there are any one bits identified in the nodes (either leaf nodes or branch nodes) directly below (i.e. which provide inputs to it). A branch node has four inputs: indicator outputs and position outputs from each of the nodes below. A branch node has two outputs: a single digit indicator output and a multibit position output.

If a one bit is present in either of the indicator inputs the branch node outputs a first output as an indicator output and if a one bit is not present it outputs a second output as an indicator output. For example, if a one bit is found among either of the two indicator inputs (indicating that a one bit is present among the respective bits of the vector) a one might be output as a first indicator output. If no one bit is found among the two indicator inputs a zero might be output as a first indicator output.

The second output from a branch node is a multibit position output. Similar to the leaf node, the second output is only valid if the indicator output indicates that a one bit is present. If valid, the position output indicates the position of the first one bit, starting from the least significant bit.

The multibit position output can be divided into the most significant bit (MSB) and the least significant bits (LSBs), which comprise all the bits except the most significant bit.

The most significant bit indicates the nodal position, starting from the least significant bit, of the first indicator input that indicates a one bit is present.

| Indicator from node 1 | Indicator from node 0 | MSB position output |
|---|---|---|
| 0 | 0 | 0/Not valid |
| 0 | 1 | 0 |
| 1 | 0 | 1 |
| 1 | 1 | 0 |

The least significant bits for the position output of the branch node are copied from position output of either node 0 or node 1 depending on whether the MSB is based on the indicator from node 0 or node 1. So, in the example above, if the MSB is based on the indicator from node 0 (because the indicator input from 0 is one) then the LSBs are taken from the position input from node 1. If the MSB is based on the indicator from node 1 (because the indicator from node 0, which takes precedence, is zero and the indicator from node 1 is one) then the LSBs are taken from the position input from node 1.

The position output has a number of bits equal to the number of the level at which the node is located. So, a branch node on the second level has a two bit position output. A branch node on the fourth level has a four bit position output and a branch node on the nth level has an n bit position output.

The operation of a branch node at level n can be summarised:
- "Indicator output" is set to one if either of the received indicator signals, indicator input 0 or indicator input 1 (i.e. the indicator signals received from level n-1, which are indicator *outputs* of nodes in level n-1), are zero
- "Position output" MSB is the position of the first received indicator signal, indicator input 0 or indicator input 1, that is set to one (indicator input 0 takes priority). It can be NOT indicator input 0.
- "Position output" LSBs are copied from received signal position input 0 or position input 1 (i.e. from one of the position signals received from level n-1, which are also position *output* signals from nodes in level n-1), depending on which indicator input 0 or indicator input1 input is used in position output MSB (indicator input 0 takes priority)

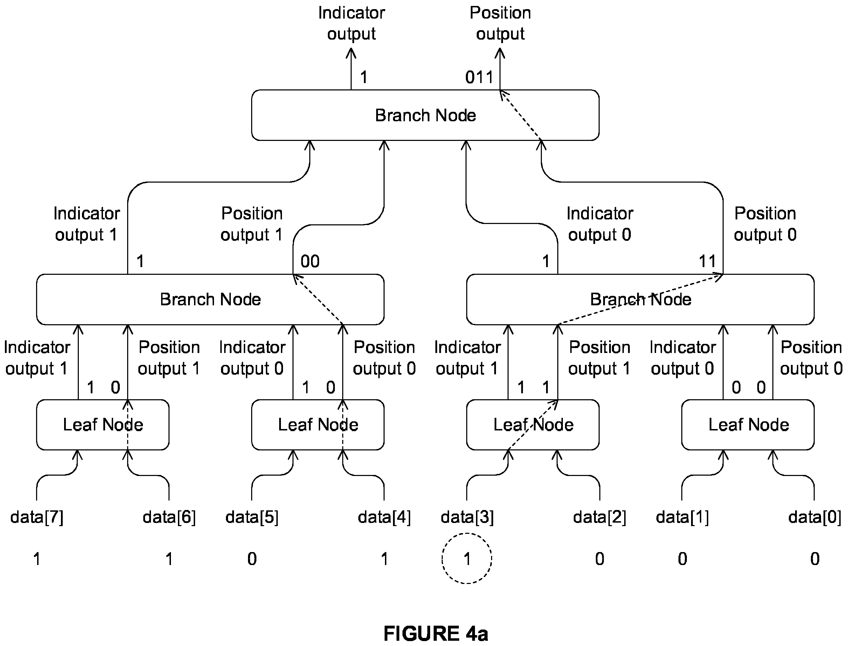

Figure 4a depicts a vector input into the three level system depicted in Figure 2. This depicts how the bits of the vector are processed. At the first level, each leaf node searches, and identifies, whether a one bit is present in the two bit inputs.

At the second level, the branch nodes identify whether a one bit is present in either of the indicator inputs (which indicate whether a one bit is present in the respective bits of the vector) and the position of any one bit in the respective bits of the vector. So, in both the right hand and left hand second level branch nodes in figure 4a the indicator output is set to one because (at least) one of the indicator inputs is one.

Starting from the least significant bit the position of the first one bit indicator input is identified and set as the most significant bit in the position output. In the right hand second level branch node the indicator input from the right hand (i.e. least significant bit) leaf node is zero. The indicator input from the left hand leaf node is one and so the most significant bit is set to one, the position of the first one among the indicator inputs. In the left hand second level branch node the indicator input from the right hand (least significant bit) leaf node is one so the most significant bit of the position output is set to zero, the position of the first one among the indicator inputs.

The third level branch node has inputs from the two second level branch nodes. A one is found in at least one of the indicator inputs to the third level branch node so the indicator output is set to one. The position of the first one in the indicator outputs is zero (the right hand/least significant bit node) so the most significant bit of the position output is set to zero. As the most significant bit of the position output is based on the indicator output from the right hand/least significant bit node the two digit least significant bits are the same as the position input from the right hand/least significant bit node.

The indicator output from the third level indicates that a one bit has been found and the position output gives the position of the first one bit. In this case the position is given as bit number three.

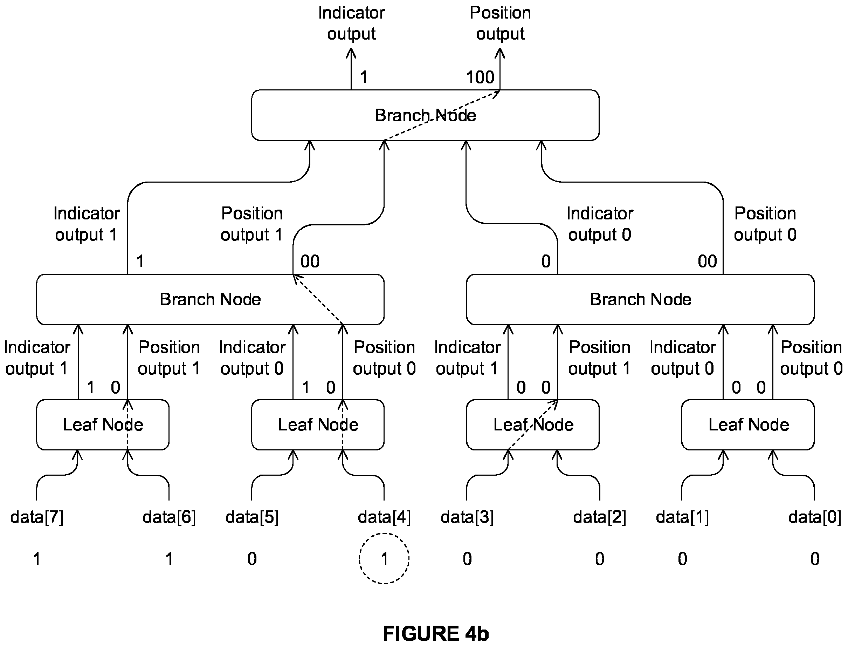

Figure 4b depicts the same three level system processing a different vector. Here, the first one bit is at bit number four.

As can be seen, each level in the multi-level structure provides a single bit of the final result. Each tree level takes approximately the same processing time so doubling the length of the vector increases the processing time by approximately the same amount. A vector of 256 bits has eight tree levels. The present approach considerably speeds up processing compared to conventional methods of finding the first one bit in which the time taken scales linearly with the length of the vector. For example, the present approach can search vectors of up to 2048 bits in one clock cycle at 900MHz.

The examples described above start searching from the least significant bit. However, on occasions, for example, in circular buffers or instruction queues, it is desirable to search from a particular starting position.

Searching from a starting position can be achieved in the present approach using an index indicating the starting search position. Nodes (or pairs or groups of two) are switched into an on, off, or indexed state based on the relative location of the node and the index. Nodes (or pairs or groups of two) positioned at a lower bit position than the index position are switched into an off state. In an off state the indicator output is set to zero.

Nodes (or pairs or groups of two) positioned at a higher bit position than the index position are switched into an on state and the inputs are examined as described above.

Nodes (or pairs or groups of two) which straddle the index, or start, position are switched into an indexed state. In an indexed state the inputs only from positions higher than the index position are searched to find a one bit.

The states are assigned to the nodes (or pairs or groups of two) as follows:
- Nodes whose inputs are wholly below the start position are given state OFF
- Nodes whose inputs are wholly above the start position are given the state ON
- Nodes whose inputs straddle the start position are given the state INDEX

The functions are as follows:
- OFF - do not examine either input and set the indicator output to zero
- ON - examine input 0 followed by input 1 but ignore the start input
- INDEX - examine input 0 followed by input 1 if start=0, otherwise only examine input 1

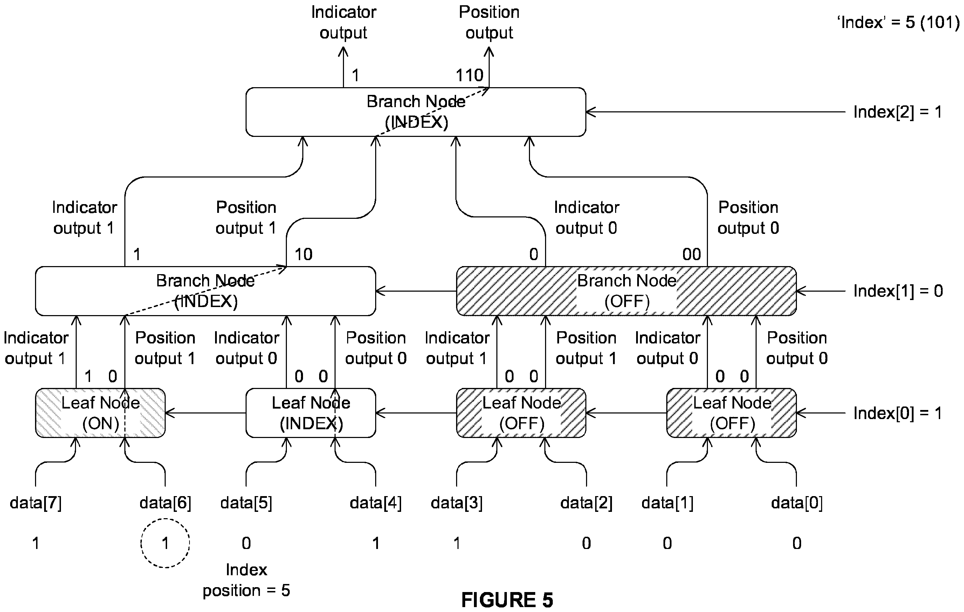

Figure 5 depicts a three level system with a starting search position at data[5], or index of [101]. The bits of the index [101] are used in the determination of node states (as further explained herein), with each bit relating to a level within the system as illustrated on the right of Figure 5. Node states are assigned in a top down manner with the top, or root node, having an INDEX state. The state of child nodes is then assigned based on the state of the node. If a node is in an ON or OFF state then both child nodes are assigned, or switched, to the same state. If the node is in an INDEX state, and the index input for this level is [1] then the right child node (input 0) is switched to an OFF state, otherwise the right child node is assigned an INDEX state. If the node is in an INDEX state and the index input for this level is [0] then the left child node (input 1) is assigned an ON state, otherwise the left child node is assigned an INDEX state.

The assignation of states for a right hand child node can be summarised as follows:
- If the (parent) node is in an OFF or ON state then the right child node is assigned the same state
- If the index input for the parent node is [1] then the right child is assigned an OFF state
- Otherwise the right child node is assigned an INDEX state

The assignation of states for a left hand child node can be summarised as follows:
- If the (parent) node is in an OFF or ON state then the left child node is assigned the same state
- If the index input for the parent node is [0] then the left child is assigned an ON state
- Otherwise the left child node is assigned an INDEX state

In figure 5 the top, or level three, node is switched to an index state. As can be seen the index for the level three, or top node, is [1] (the MSB of the index [101]) and therefore the right hand child node is switched to an OFF state. As the index for the level three node the left hand child node is assigned an INDEX state.

Looking at the right hand level two node in an OFF state, all child nodes are assigned an OFF state.

Looking at the left hand level two node in an INDEX state, the index for this level node is [0]. The right hand child node (i.e. at the first level) is therefore assigned an INDEX state. The left hand node is therefore assigned an ON state.

Looking at the first level node in an INDEX state, only the left hand (data[5]) input is examined because the index for the first level is a [1] (the LSB of the index [101]), indicating that only input 1 should be examined.

With the nodes switched as described above data[6] is output as the first one bit starting from position [5].

A wrap function can be implemented in conjunction with the starting position. This is achieved by running two parallel find first functions: a first find first function which begins at the search starting position and a second find first function which has no starting position (i.e. begins at the least significant bit). If a one bit is found by the first find first function the position of that one bit is output as the first one bit. If no one bit is found by the first find first function the position of a one bit found by the second find first function is output as the first one bit. Thus, a wrapping function can easily be implemented.

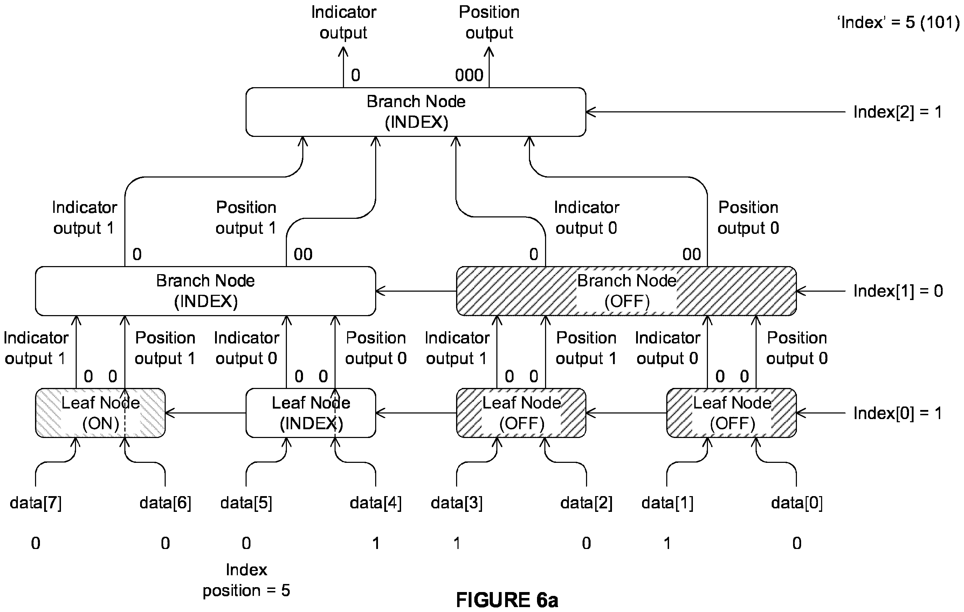

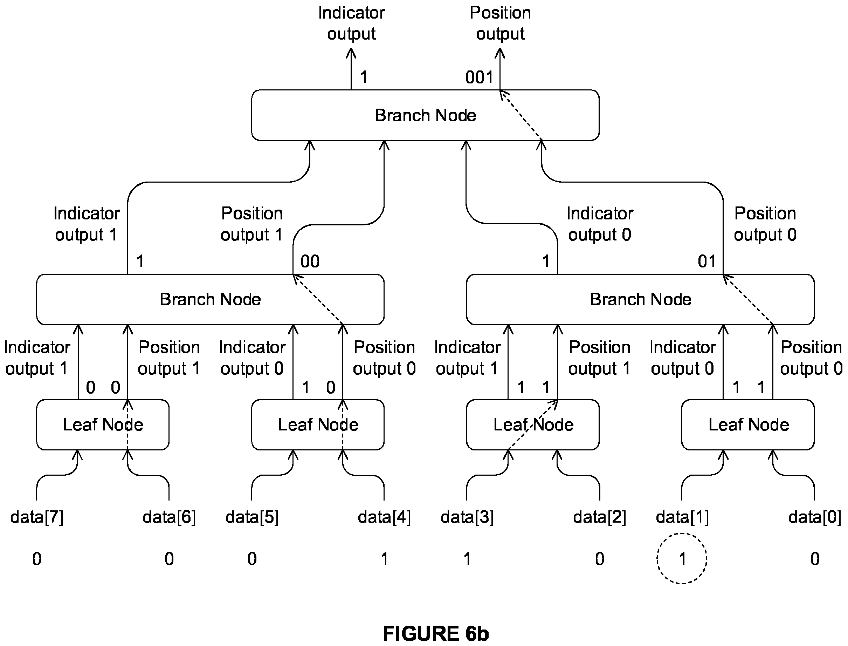

Figures 6a and 6b depict the use of a starting position in conjunction with a wrap function. For this, there are two find first functions: one (depicted in figure 6a) which begins at the search starting position and a second (depicted in Figure 6b) find first function which begins at the least significant bit.

Figure 6a depicts a find first function using a starting position [5]. As described above in relation to figure 5 the nodes, or groups and pairs of two, are switched into an on, off or indexed state. Looking at the first level node in an INDEX state, only the left hand (data[5]) is examined. However, none of data[5], data[6] or data[7] have a one bit and therefore the indicator output from the level three node is 0.

Figure 6b depicts a starting function, operating on the same inputs as the find first function in figure 6a, but starting searching from the least significant bit. As can be seen, the first one bit is at data[1] and thus the output from the top level node indicates that a one bit has been found and also that the position is data[1] (shown by 001 as the position output).

As no one bit was found by the find first function searching from a starting position the result, or output from the find first function searching from the least significant bit (depicted in Figure 6b) is used. Thus the first one bit found is at position 001. The two find first functions depicted in Figures 6a and 6b can operate simultaneously or consecutively.

The examples above describe a three level system but this can easily be increased and for each level increase the maximum size of the vector to be searched doubles. Thus, lengthy vectors can quickly and easily be searched. A seven level system could be used to search a 128 bit vector and a 9 level system used to search up to a 512 bit vector.

The system can also be used to search vectors which are not 2ⁿ bits long. For vectors which aren't 2ⁿ bits long zeros are added to the most significant bit end until a vector is 2ⁿ bits long. So, the vector 011001 would have two zeros added to the most significant bit end to become 00011001 and it could then be searched by a three level system.

The examples above describe searching for the first one bit. However, this method can also be used to search for the first zero bit. Either a zero bit can be searched for in the way that a one bit is searched for above. Alternatively the zero bits can be converted to one bits and the one bits converted to zero bits (so 00011001 becomes 11100110) and the method of searching for a one bit described above used.

The methods and systems described above can be embodied in fixed function or fixed logic hardware. For example, a plurality of fixed logic devices can be used for each node to process each pair or group of two.

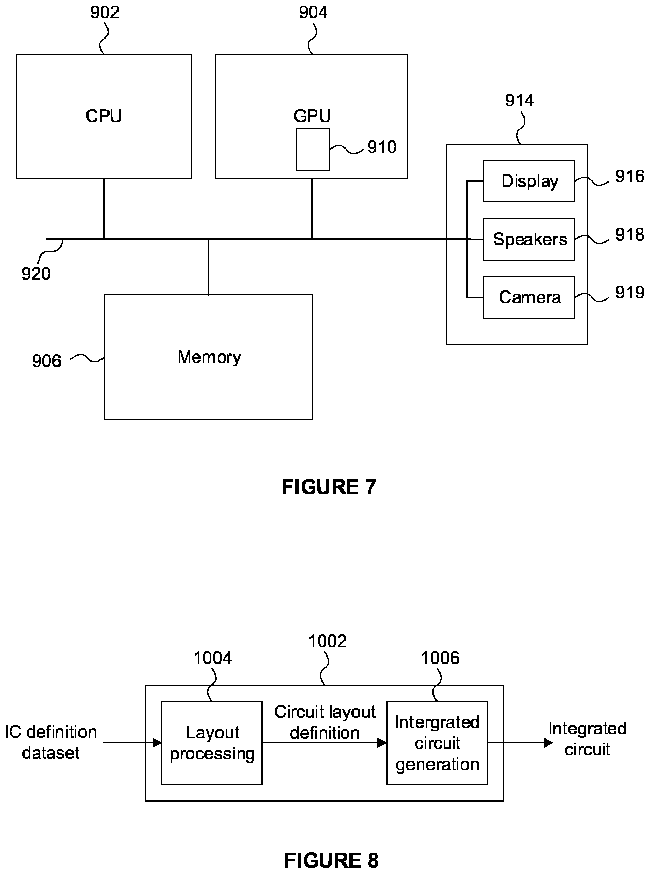

Figure 7 shows a computer system in which the data processing systems described herein may be implemented. The computer system comprises a CPU 902, an NNA 904, a memory 906 and other devices 914, such as a display 916, speakers 918 and a camera 919. A processing block 910 (corresponding to mapping unit 12, MMM 40, and hardware accelerator 200) is implemented on the NNA 904. The components of the computer system can communicate with each other via a communications bus 905. A store 912 (corresponding to memory 25) is implemented as part of the memory 906.

While Fig. 7 illustrates one implementation of a graphics processing system, it will be understood that a similar block diagram could be drawn for an artificial intelligence accelerator system - for example, by replacing either the CPU 902 or the GPU 904 with a Neural Network Accelerator (NNA), or by adding the NNA as an additional unit. In such cases, the processing block 910 can be implemented in the NNA.

The data processing system of Figures 1 to 6 are shown as comprising a number of functional blocks. This is schematic only and is not intended to define a strict division between different logic elements of such entities. Each functional block may be provided in any suitable manner. It is to be understood that intermediate values described herein as being formed by a data processing system need not be physically generated by the data processing system at any point and may merely represent logical values which conveniently describe the processing performed by the data processing system between its input and output.

The data processing systems described herein may be embodied in hardware on an integrated circuit. The data processing systems described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java^{®} or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a data processing system configured to perform any of the methods described herein, or to manufacture a data processing system comprising any apparatus described herein. An integrated circuit definition dataset may be, for example, an integrated circuit description.

Therefore, there may be provided a method of manufacturing, at an integrated circuit manufacturing system, a data processing system as described herein. Furthermore, there may be provided an integrated circuit definition dataset that, when processed in an integrated circuit manufacturing system, causes the method of manufacturing a data processing system to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a data processing system will now be described with respect to Figure 8.

Figure 8 shows an example of an integrated circuit (IC) manufacturing system 1002 which is configured to manufacture a data processing system as described in any of the examples herein. In particular, the IC manufacturing system 1002 comprises a layout processing system 1004 and an integrated circuit generation system 1006. The IC manufacturing system 1002 is configured to receive an IC definition dataset (e.g. defining a data processing system as described in any of the examples herein), process the IC definition dataset, and generate an IC according to the IC definition dataset (e.g. which embodies a data processing system as described in any of the examples herein). The processing of the IC definition dataset configures the IC manufacturing system 1002 to manufacture an integrated circuit embodying a data processing system as described in any of the examples herein.

The layout processing system 1004 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1004 has determined the circuit layout it may output a circuit layout definition to the IC generation system 1006. A circuit layout definition may be, for example, a circuit layout description.

The IC generation system 1006 generates an IC according to the circuit layout definition, as is known in the art. For example, the IC generation system 1006 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1006 may be in the form of computer-readable code which the IC generation system 1006 can use to form a suitable mask for use in generating an IC.

The different processes performed by the IC manufacturing system 1002 may be implemented all in one location, e.g. by one party. Alternatively, the IC manufacturing system 1002 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In some embodiments, processing of the integrated circuit definition dataset at an integrated circuit manufacturing system may configure the system to manufacture a system as described herein. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 7 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 7, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A machine-implemented method of processing a vector, the method comprising:
receiving the vector;
grouping the bits of the vector into mutually exclusive pairs of two adjacent bits;
identifying, for each pair of two, the presence or absence of a one bit and outputting, for each pair of two, a first level indicator output indicating whether a one bit is present in the respective bits of the vector and, for each pair of two, a first level position output indicating the position of the first one bit in the respective bits of the pair;
grouping the first level indicator outputs and the first level position outputs into mutually exclusive groups of two adjacent first level indicator outputs and first level position outputs; and
determining (i) based on a group of two adjacent first level indicator outputs, the presence or absence of a one bit in the respective bits of the vector and outputting, for each group of two adjacent first level indicator outputs, a second level indicator output indicating whether a one bit is present in the respective bits of the vector and (ii) based on a group of two adjacent first level position outputs, the position of the first one bit in the respective bits of the vector and outputting, for each group of two adjacent first level position outputs, a second level position output indicating the position of the first one bit in the respective bits of the vector.

2. A machine-implemented method of processing a vector according to claim 1, the method comprising:
grouping the second level indicator outputs and the second level position outputs into mutually exclusive groups of two adjacent second level indicator outputs and second level position outputs;
determining (i) based on a group of two adjacent second level indicator outputs, the presence or absence of a one bit in the respective bits of the vector and outputting a third level indicator output indicating whether a one bit is present in the respective bits of the vector and (ii) based on a group of two adjacent second level position outputs, the position of the first one bit in the respective bits of the vector and outputting a third level position output indicating the position of the first one bit in the respective bits of the vector.

3. A machine level-implemented method or processing a vector according to claim 2 wherein the steps of grouping (n-1)th level indicator outputs and (n-1)th level position outputs into mutually exclusive groups of two adjacent (n-1)th level indicator outputs and (n-1)th level position outputs and determining (i), based on a group of two adjacent (n-1)th level indicator outputs, the presence or absence of a one bit in the respective bits of the vector to output an n level indicator output indicating whether a one bit is present in the respective bits of the vector, and (ii) based on a group of two adjacent (n-1)th level position outputs, the position of the first one bit in the respective bits of the vector and outputting an n level position output indicating the position of the first one bit in the respective bits of the vector are repeated until a grouping and determining step is determining the presence or absence of a one bit, and the position of the first one bit in the whole vector.

4. A machine-implemented method of processing a vector according to any one of the preceding claims wherein the position of the first one bit is starting from the least significant bit.

5. A machine-implemented method of processing a vector according to any one of claims 1 to 4 wherein the position of the first one bit is starting from the most significant bit.

6. A machine implemented method according to any one of the preceding claims further comprising adding zero bits to the vector at the most significant bits end until the vector has a length of a power of 2.

7. A method according to any one of the preceding claims wherein the most significant bit in the second level position output is based on the first one bit in the first level indicator outputs in the group of two adjacent first level indicator outputs, a zero most significant bit indicating a first one bit in a first pair of two and a one most significant bit indicating a first one bit in a second pair of two and optionally wherein the least significant bits in the second level position output are the position input from the pair of two on which the most significant bit is based.

8. A method according to any one of the preceding claims wherein a position output is only valid if the corresponding indicator output indicates that a zero is present in the respective bits of the vector.

9. A method according to any one of the preceding claims, further comprising:
receiving an index position indicating the starting search position;
switching each pair of two and each group of two into one of three states on the basis of the relative location of the index position and the position of the bits in the vector, the three states comprising on, off and indexed,
wherein the outputting an indicator output based on each pair of two and each group of two comprises, if the pair or group of two is in an off state outputting an indicator output indicating that no one bit is present, and if the pair or group of two is in an on state outputting an indicator output based on the presence or absence of a one bit, and if the pair or group of two is in an indexed state outputting an indicator output based on the presence or absence of a one bit only for positions to be searched and optionally wherein each pair of two and each group of two at a lower bit position than the index position is switched into an off state, each pair of two and each group of two at a higher bit position than the index position is switched into an on state, and each pair of two and each group of two including the index position is switched into an indexed state.

10. A method according to claim 9 wherein the method comprises n levels of grouping and either identifying or determining the presence of absence of a one bit and the index position comprises n bits, the first bit being applied to the nth level to switch each of the pair of groups or pairs at the (n-1)th level into an on, off or indexed state.

11. A machine implemented method of processing a vector using an index position according to any one of claims 9 to 10 and further comprising, with no index position:
identifying, in each pair of two, the presence or absence of a one bit and outputting a first level indicator output indicating whether a one bit is present in the respective bits of the vector and a first level position output indicating the position of the first one bit in the respective bits of the vector;
grouping the first level indicator output and the first level position outputs into mutually exclusive groups of two adjacent first level indicator outputs and first level position outputs;
determining (i) based on a group of two adjacent first level indicator outputs, the presence or absence of a one bit in the respective bits of the vector and outputting a second level indicator output indicating whether a one bit is present in the respective bits of the vector and (ii) based on a group of two adjacent first level position outputs, the position of the first one bit in the respective bits of the vector and outputting a second level position output indicating the position of the first one bit in the respective bits of the vector.

12. A method according to claim 11 wherein if a one bit is identified from the processing using an index position, the position of the first one bit from the processing using an index is output as a result and if a one bit is not identified from the processing using an index position the position of the first one bit from the processing with no index is output as a result.

13. A machine-implemented method of processing a vector, the method comprising:
receiving the vector;
grouping the bits into mutually exclusive pairs of two adjacent bits;
identifying, for each pair of two, the presence or absence of a zero bit and outputting, for each pair of two, a first level indicator output indicating whether a zero bit is present in the respective bits of the vector and, for each pair of two, a first level position output indicating the position of the first zero bit in the respective bits of the pair;
grouping the first level indicator output and the first level position outputs into mutually exclusive groups of two adjacent first level indicator outputs and first level position outputs;
determining, based on a group of two adjacent first level indicator outputs, the presence of absence of a zero bit in the respective bits of the vector and outputting for each group of two adjacent first level indicator outputs, a second level indicator output indicating whether a zero bit is present in the respective bits of the vector and, based on a group of two adjacent first level position outputs, the position of the first zero bit in the respective bits of the vector and outputting, for each group of two adjacent first level position outputs, a second level position output indicating the position of the first zero bit in the respective bits of the vector.

14. A graphics processing system configured to perform the method of any of claims 1 to 13 optionally
wherein the graphics processing system is embodied in hardware on an integrated circuit.

15. Computer readable code configured to cause the method of any of claims 1 to 16 to be performed when the code is run.
